# EUROPÄISCHE PATENTSCHRIFT

(11) **EP 3 189 568 B1**
(45) Veröffentlichungstag und Bekanntmachung des Hinweises auf die Patenterteilung: **08.07.2020**
(21) Anmeldenummer: 15750035.6
(22) Anmeldetag: 10.08.2015
(51) Int. Cl.: H02G 11/00, F16G 13/16, H02G 3/04

(54) **LEITUNGSFÜHRUNGSEINRICHTUNG**
CABLE ROUTING DEVICE
DISPOSITIF DE GUIDAGE DE CONDUITE

(30) Priorität: 01.09.2014 DE 202014104075 U
(43) Veröffentlichungstag der Anmeldung: 12.07.2017
(73) Patentinhaber: Igus GmbH, 51147 Köln (DE)
(72) Erfinder: Jaeker, Thilo-Alexander, 53757 Sankt Augustin (DE)
(74) Vertreter: Lippert Stachow Patentanwälte Rechtsanwälte
(86) Internationale Anmeldenummer: PCT/EP2015/068374
(87) Internationale Veröffentlichungsnummer: WO 2016/034373

(56) Entgegenhaltungen:
- EP-A2- 1 223 410
- EP-A2- 1 223 410
- WO-A1-2005/048432
- WO-A1-2005/048432
- WO-A1-2007/065422
- WO-A1-2007/065422
- WO-A2-2008/049824
- WO-A2-2008/049824
- CN-U- 203 322 160
- JP-A- H0 678 439
- JP-A- H0 678 439

## Beschreibung

Die Erfindung betrifft eine Leitungsführungseinrichtung mit einem als Energieführungskette ausgebildeten Leitungsträger zur Aufnahme und Führung von Leitungen zwischen einem ersten Anschluss und einem zweiten Anschluss, die relativ zueinander beweglich sind, und einer Führungsvorrichtung für den Leitungsträger, wobei der Leitungsträger ein mit dem ersten Anschluss verbundenes erstes Trum und ein mit dem zweiten Anschluss verbundenes zweites Trum aufweist, die durch einen Umlenkbereich miteinander verbunden sind und die Energieführungskette Glieder aufweist, die jeweils zwei Seitenlaschen und einen diese miteinander verbindenden, in Bezug auf den Umlenkbereich äußeren Quersteg und inneren Quersteg aufweisen, und die Führungsvorrichtung mindestens einen Anlagebereich zur stationären Anlage zumindest eines Teils eines der Trume aufweist, wobei der Leitungsträger mindestens einen Magneten aufweist, der im Bereich eines äußeren Querstegs angeordnet ist, und der Anlagebereich zur stationären Anlage mindestens eines Teils eines der Trume einen ferro- oder ferrimagnetischen Werkstoff aufweist, und an einer Seite der Führungsvorrichtung angeordnet ist, die der in Bezug auf den Umlenkbereich nach außen weisenden Seite des Leitungsträgers gegenüber liegt, wobei der mindestens eine Magnet in einem vorbestimmten Positionsbereich des Leitungsträgers in Bezug auf die Führungsvorrichtung mit dem Anlagebereich derart zusammenwirkt, dass das den Magneten aufweisende Trum mit einer vorbestimmten magnetischen Anziehungskraft an dem Anlagebereich anhaftet

Leitungsführungseinrichtungen der vorstehend genannten Art sind in verschiedenen Ausführungen zur Abstützung oder Anlage eines der beiden oder beider Trume eines als Energieführungskette Leitungsträgers bekannt. Je nach Anordnung und Führung des Leitungsträgers werden unterschiedliche Führungsvorrichtungen verwendet, um die Trume in geeigneter Weise durch zweckmäßig gestaltete Anlagebereiche abzustützen oder zu halten.

Bei einer Anwendungsart sind die beiden Trume horizontal und übereinanderliegend angeordnet. Man unterscheidet daher das Obertrum und Untertrum des Leitungsträgers. Das Untertrum ist meist mit einem stationären Anschluss verbunden und wird auf einer Basis oder geeigneten Führungsvorrichtung abgelegt. Das in diesem Falle mit einem beweglichen Anschluss verbundene Obertrum kann entweder freitragend geführt, oder nach einem sich an den Umlenkbereich anschließenden freitragenden Bereich auf dem Untertrum abgelegt und jenseits des stationären Anschlusses des Untertrums durch eine geeignete Führungsvorrichtung geführt oder gänzlich durch eine geeignete Führungsvorrichtung geführt werden. Dabei kann das Obertrum auf der Führungsvorrichtung gleiten oder durch eine solche abgestützt und mitgenommen werden.

Bei einer anderen horizontalen Anwendung sind die beiden Trume nebeneinander angeordnet. Die beiden Trume liegen in diesem Fall seitlich auf einer horizontalen Ablagefläche und werden, insbesondere bei längeren Verfahrwegen des Leitungsträgers, an der in Bezug auf den Umlenkbereich nach außen weisenden Seite und der in Bezug auf den Umlenkbereich nach innen weisenden Seite durch Anlageflächen gegen horizontale Bewegungen abgestützt.

Eine Abstützung der in Bezug auf den Umlenkbereich nach außen weisenden und gegebenenfalls nach innen weisenden Seiten der Trume ist auch bei vertikaler Anordnung in vielen Fällen erforderlich, wenn der Leitungsträger in vertikaler Richtung verfahren wird. Bei längeren Verfahrwegen und größeren Verfahrgeschwindigkeiten müssen Schwingungen oder ein Gegeneinanderschlagen der Trume durch geeignete Führungsvorrichtungen vermieden werden. Insbesondere bei vertikalen Anwendungen sind Führungsvorrichtungen zur Abstützung der in Bezug auf den Umlenkbereich des Leitungsträgers nach außen und nach innen weisenden Seiten der Trume relativ aufwändig, da die Abstützung der innen liegenden Seiten eine Durchführung des Umlenkbereichs des Leitungsträgers ermöglichen muss. Die Abstützung des mit einem beweglichen Anschluss verbundenen Trums an dessen nach innen weisender und/oder nach außen weisender Seite führt darüber hinaus zu einer unerwünschten Gleitreibung.

Eine Leitungsführungseinrichtung der eingangs genannten Art ist aus der EP 2 546 546 A1 bekannt. Die Führungsvorrichtung für ein von einem ersten Anschluss herabhängendes erstes Trum einer Energieführungskette weist einen vertikal verlaufenden Anlagebereich zur stationären Anlage dieses Trums auf. In den Anlagebereich ist eine Rinne eingelassen, die zur Aufnahme und zum Schutz von an der Außenseite der äußeren Querstege befestigten Magneten vor Berührung mit dem Anlagebereich dient. Der aus Kunststoff gefertigte Anlagebereich weist eine am Boden der Rinne angeordnete, durch die Magnete magnetisierbare Stahlplatte auf. Die von der Rinne aufgenommenen und darin vor Kontakt mit dem Anlagebereich geschützten Magnete können mit einer Kunststoffhülle überzogen sein.

Eine Leitungsführungseinrichtung mit einem als Energieführungskette ausgebildeten Leitungsträger und einer Führungsvorrichtung für zumindest ein Trum der Energieführungskette, wobei das mindestens eine Trum durch Magnete gehalten wird, die mit einem magnetisierbaren Material zusammenwirken, ist aus der WO 2007/065422 A1 bekannt. Die Führungsvorrichtung weist zwei seitlich gegenüberliegende Führungen auf, die mindestens zwei benachbarte Magnete mit ungleichnamigen Polen aufweisen, zwischen denen das zumindest eine Trum der Energieführungskette anordenbar ist. Das mindestens eine Trum weist einen ferro- oder ferrimagnetischen Werkstoff auf, der durch das durch die Pole erzeugte magnetische Feld magnetisierbar ist.

Die durch den magnetischen Schluss bedingten magnetischen Kräfte halten die Energieführungskette freischwebend zwischen den die gegenüberliegenden Magnete aufweisenden Seitenführungen. Die Leitungsführungseinrichtung ist derart ausgelegt, dass die Energieführungskette zwischen den die Magnete aufweisenden Seitenführungen nicht in einen forcierten Kontakt mit der Führungsvorrichtung kommt.

Eine Leitungsführungseinrichtung mit einer Energieführungskette, die mindestens einen Magneten aufweist, ist auch aus der WO 2005/048432 A1 bekannt. Der mindestens eine Magnet wirkt jedoch mit einem gegenüberliegenden Magneten an der Innenseite einer die Führungsvorrichtung bildenden Ablegewanne derart zusammen, dass die Energieführungskette freischwebend im Bereich der Magnete in der Ablegewanne haltbar ist. Da sich gleichnamige Pole der Magnete gegenüberliegen, kommt es nicht zu einer Anlage der die Magnete aufweisenden Bereiche der Energieführungskette und der Ablegewanne. Die Leitungsführungseinrichtung gemäß der WO 2005/048432 A1 soll gerade einen Kontakt zwischen diesen Bereichen durch die abstoßende magnetische Kraft vermeiden.

Die JP H06 78439 A offenbart einen bandförmigen Leitungsträger, der in einer Führungsvorrichtung geführt ist. Der Leitungsträger weist an seiner bezüglich des Umlenkbereichs nach innen weisenden Seite eine magnetisierbare Schicht auf. Weiterhin weist die Führungseinrichtung in ihrem Basisbereich, auf dem das bewegliche Untertrum des Leitungsträgers aufliegt, einen plattenförmigen Permanentmagneten auf. Dieser wirkt mit der magnetisierbaren Schicht zu einer beweglichen Anlage des Untertrums auf dem Basisbereich und soll einem Abheben des beweglichen Untertrums beim Verfahren des Leitungsträgers entgegenwirken. Der zur stationären Anlage des Obertrums dienende Anlagebereich ist nicht mit einem Magneten versehen, so dass er das Obertrum nicht mit einer magnetischen Anziehungskraft hält.

Aus der WO 2008/049824 A2 ist eine Energieführungskette bekannt,, die auf ihren inneren Querstegen montierte, in Hüllen angeordnete Magnete aufweist. Die Magnete dienen dazu, eine magnetische Abstoßung zwischen den beiden Trumen der Energieführungskette zu erzeugen. Die Hüllen bestehen aus zwei in Längsrichtung der Energieführungskette lösbar miteinander verbundenen Teilen, die Befestigungsmittel zur Befestigung an dem jeweiligen inneren Quersteg in Form von Klauen aufweisen. Die Befestigung der Hüllenteile mit dem darin angeordneten Magneten erfolgt dadurch, dass beim Zusammenschieben der beiden Hüllenteile in Längsrichtung der Energieführungskette die Klauen mit ihren Vorsprüngen über den Quersteg geführt werden und nach Verrasten der beiden Hüllenteile durch Rasthaken eine formschlüssige Verbindung mit dem Quersteg bilden.

Die CN 203 322 160 U offenbart eine Energieführungskette, deren innere Querstege aus einem magnetischen Werkstoff bestehen. Nordpole sind an der zum gegenüberliegenden Trum der Energieführungskette hin weisenden Seite der inneren Querstege angeordnet und wirken im Bereich des Obertrums mit gegenüberliegenden Nordpolen der inneren Querstege des Untertrums sowie bei ausgezogener Energieführungskette mit den Nordpolen von außerhalb des Untertrums auf dessen Basisfläche angeordneten Magneten zusammen. Aufgrund der Abstoßungskräfte zwischen den Nordpolen wird das Obertrum beim Verfahren des Leitungsträgers freischwebend gehalten.

Der vorliegenden Erfindung liegt die Aufgabe zugrunde, eine Führungsvorrichtung für eine Leitungsführungseinrichtung der eingangs genannten Art für die genannten unterschiedlichen Anwendungen eines Leitungsträgers bereitzustellen, die ohne größeren Aufwand eine sichere Anlage zumindest eines Trums an einem Anlagebereich der Führungsvorrichtung ermöglicht und Gleitreibung vermeidet.

Die Aufgabe wird erfindungsgemäß dadurch gelöst, dass bei einer Leitungsführungseinrichtung der eingangs genannten Art der mindestens einen Magnet in einer Halterung angeordnet ist, die auf den betreffenden äußeren Quersteg aufclipsbar ist, und eine zum äußeren Quersteg offene und nach außen geschlossene Tasche aufweist, in die der Magnet einsetzbar ist, oder der Magnet in einer in Längsrichtung der Energieführungskette offenen Tasche eines äußeren Querstegs angeordnet ist, oder der Magnet in einer sich von der Außenseite einer Seitenlasche durch diese hindurch in einen äußeren Quersteg hinein erstreckenden Tasche angeordnet ist, in die er von außen einführbar ist.

Die ein Anhaften bewirkende magnetische Anziehungskraft kann so bestimmt sein, dass sie ihr entgegen gerichtete auf den Leitungsträger wirkende Kräfte bis zu einem gewissen Grade kompensiert, so dass ein Lösen des mit dem Magneten versehenen Bereichs des Trums vom Anlagebereich durch die ein Verfahren des Leitungsträgers bewirkende Kraft noch ermöglicht wird. Das heißt, dass die in den Umlenkbereich hinein wirkende Kraft zum Verfahren des Leitungsträgers im Stande ist, den mit dem mindestens einen Magneten versehenen Bereich des Trums in den Umlenkbereich zu überführen. Dies ist insbesondere erforderlich, wenn es sich bei dem mindestens einen Magneten um einen Permanentmagneten handelt. Mögliche Schwingungen des Trums beim Verfahren des Leitungsträgers über längere Verfahrwege und/oder mit größeren Geschwindigkeiten, die zu einem Gegeneinanderschlagen der Trume bei deren vertikaler Anordnung führen können, werden dadurch vermieden.

Der einen ferro- oder ferrimagnetischen Werkstoff aufweisende Anlagebereich gemäß der vorliegenden Erfindung ist an einer Seite der Führungsvorrichtung angeordnet, die der in Bezug auf den Umlenkbereich nach außen weisenden Seite des Leitungsträgers gegenüberliegt. Der Anlagebereich kann sich längs eines der Trume oder längs beider Trume (mit jeweils einem Anlagebereich) erstrecken.

Ein mit einem oder mehreren am Leitungsträger angeordneten Magneten zusammenwirkender Anlagebereich mit ferro- oder ferrimagnetischem Werkstoff kann auch an einer in einem Winkel ungleich Null zur nach außen weisenden Seite angeordneten Seitenwand der Führungsvorrichtung vorgesehen sein.

Der ferro- oder ferrimagnetische Werkstoff des Anlagebereichs der Führungsvorrichtung kann in Form von Partikeln in Kunststoff gebunden sein. Die Führungsvorrichtung kann insgesamt aus einem kunststoffgebundenen magnetisierbaren Werkstoff bestehen. Andererseits können bestimmte Bereiche der Führungsvorrichtung aus einem kunststoffgebundenen magnetisierbaren Kunststoff hergestellt sein. Diese Bereiche können mit allen üblichen Mitteln mit den übrigen Bereichen der Führungsvorrichtung verbunden sein, zum Beispiel mit diesen durch ein Zweikomponenten-Spritzverfahren gefertigt sein. Wesentlich für die vorliegende Erfindung ist, dass ein ferro- oder ferrimagnetischer Werkstoff verwendet wird, der mit dem mindestens einen am oder im Leitungsträger angeordneten Magneten derart wechselwirkt, dass der Leitungsträger an der Führungsvorrichtung alleine durch die Wechselwirkung zwischen dem ferro- oder ferrimagnetischen Werkstoff und dem Magneten ohne zusätzliche Mittel, die ein Anhaften bewirken, gehalten wird.

Bei dem mindestens einen Magneten kann es sich um einen insbesondere kunststoffgebundenen Permanentmagneten handeln. Der kunststoffgebundene Permanentmagnet kann, wenn er nicht lösbar an oder im Leitungsträger angeordnet werden soll, mit allen üblichen Mitteln mit den übrigen Bereichen des Leitungsträgers verbunden sein, zum Beispiel mit den übrigen Bereichen durch ein Zweikomponenten-Spritzverfahren gefertigt sein.

Eine zu dem in Taschen angeordneten Magneten alternative erfinderische Lösung besteht darin, dass bei einer Leitungsführungseinrichtung der eingangs genannten Art der mindestens eine Magnet als Elektromagnet ausgebildet ist.

Aus der WO 2007/065422 A1 sind zwar Elektromagnete bekannt, die mit ferromagnetischen Platten im Bereich der Querstege einer Energieführungskette zwecks magnetischer Abstoßung und freischwebender Halterung zwischen den Polen zusammenwirken. Die Elektromagnete bilden jedoch eine seitliche Führungsvorrichtung für das betreffende Trum und werden von außerhalb der Führungsvorrichtung mit Strom versorgt.

Vorzugsweise ist der mindestens eine Magnet lösbar am Leitungsträger befestigt. Er kann somit in Abhängigkeit von der Verwendung des Leitungsträgers an einer gewünschten Stelle desselben zur Anhaftung eines bestimmten Bereichs des Leitungsträgers an einem Anlagebereich der Führungsvorrichtung angebracht werden.

Insbesondere kann der Leitungsträger in äquidistanten Bereichen in seiner Längsrichtung jeweils mindestens einen Magneten aufweisen.

Für bestimmte Anwendungsfälle kann die Führungsvorrichtung ausschließlich für eines der Trume einen Anlagebereich mit ferro- oder ferrimagnetischem Werkstoff aufweisen. In manchen Fällen genügt es, das mit einem stationären Anschluss verbundene Trum beim Verfahren des Leitungsträgers, zum Beispiel in vertikaler Richtung, zu stabilisieren und zu diesem Zweck erfindungsgemäß mit mindestens einem Magneten zu versehen, der mit einem Anlagebereich der Führungsvorrichtung zusammenwirkt, der der nach außen weisenden Seite des Trums gegenüberliegt.

In anderen Fällen kann zusätzlich oder alternativ das mit einem beweglichen Anschluss verbundene Trum mit mindestens einem Magneten versehen sein, der mit einem stationär zu diesem Trum angeordneten, d. h. mit diesem Trum mitgeführten Anlagebereich der Führungsvorrichtung zusammenwirkt. Der Anlagebereich liegt zweckmäßigerweise der nach außen weisenden Seite des mit dem beweglichen Anschluss verbundenen Trums gegenüber. Bei ausreichender magnetischer Anziehungskraft, die ein Lösen des Trums von dem mit diesem mitgeführten Anlagebereich beim Verfahren des Leitungsträgers verhindert, kann ein Verfahren des Leitungsträgers durch eine Kopplung des Anlagebereichs an einen geeigneten Antrieb bewirkt werden.

Weisen beide Trume einen Anlagebereich mit ferro- oder ferrimagnetischem Werkstoff auf, kann die Führungsvorrichtung eine erste Führungsvorrichtung für das erste Trum und eine relativ zu dieser bewegliche zweite Führungsvorrichtung für das zweite Trum einschließen, die jeweils mindestens einen ferro- oder ferrimagnetischen Werkstoff enthaltenden Anlagebereich aufweisen.

Der einen ferro- oder ferrimagnetischen Werkstoff enthaltende Anlagebereich weist vorzugsweise eine ebene dem Leitungsträger gegenüberliegende Anlagefläche auf.

In einer zweckmäßigen Weiterbildung der Erfindung sind an mindestens einem Kettenglied mindestens zwei Magnete vorgesehen, die symmetrisch in Bezug auf die parallel zu den Seitenlaschen verlaufende Längsmittelebene der Energieführungskette angeordnet sind.

Der den ferro- oder ferrimagnetischen Werkstoff aufweisende Anlagebereich der Führungsvorrichtung kann in Form einer ebenen Platte ausgebildet sein, die sich über die vollständig ausgezogene Länge des den mindestens einen Magneten aufweisenden Trums des Leitungsträgers erstreckt. Der plattenförmige Anlagebereich kann zur linearen Anlage des Trums eine flache Kontaktfläche aufweisen. Zur bogenförmigen Anlage des Trums, zum Beispiel bei einer Kreiskette, kann der plattenförmige Anlagebereich eine entsprechend gekrümmte, zum Beispiel kreisbogenförmige, Kontaktfläche aufweisen.

Der ferro- oder ferrimagnetischen Werkstoff aufweisende Anlagebereich kann an seiner auf den: Leitungsträger hin weisenden und mit diesem in Kontakt tretenden Anlagefläche eine den ferro- oder ferrimagnetischen Werkstoff überziehende Schicht aus nichtmagnetisierbarem Werkstoff aufweisen. Der nichtmagnetisierbare Werkstoff weist bevorzugt geräuschdämpfende Eigenschaften auf. Weiterhin kann er zum Schutz des magnetisierbaren Werkstoffes gegen Verschleiß dienen. Dazu besteht er vorzugsweise aus einem geeigneten Kunststoff.

Alternativ oder zusätzlich kann der mindestens eine Magnet von einer entsprechenden Schicht aus nichtmagnetisierbarem Werkstoff an seiner zum ferro- oder ferrimagnetischen Anlagebereich hin weisenden Seite überzogen sein.

Der am oder in dem Leitungsträger angeordnete mindestens eine Magnet kann insbesondere dann als Elektromagnet ausgebildet sein, wenn das die Anziehungskraft zwischen dem Magneten und dem einen ferro- oder ferrimagnetischen Werkstoff aufweisenden Anlagebereich der Führungsvorrichtung bewirkende Magnetfeld ein- und ausschaltbar sein soll. Ein Ausschalten des Magnetfeldes kann wünschenswert sein, wenn der den Magneten aufweisende Bereich des Trums in den Umlenkbereich ohne zusätzlichen Kraftaufwand beim Verfahren des Leitungsträgers übergehen soll. Auch bei horizontaler Anordnung des Obertrums eines Leitungsträgers, das an seiner in Bezug auf den Umlenkbereich außen liegenden Seite gegen seine Schwerkraft durch eine relativ große Anziehungskraft gehalten werden muss, ist ein Abschalten des Magnetfeldes beim Übergang in den Umlenkbereich und ein Einschalten des Magnetfeldes beim rückwärtigen Verfahren des Obertrums beim Übergang aus dem Umlenkbereich in das längs des Anlagebereichs gestreckte Obertrum wünschenswert.

Der mindestens eine Elektromagnet kann zu diesem Zweck signaltechnisch mit einer Steuereinrichtung verbunden sein, mit der das Magnetfeld ein- und ausschaltbar ist.

Die Steuereinrichtung kann weiterhin signaltechnisch mit einem oder mehreren Sensoren verbunden sein, der bzw. die die Position des den Elektromagneten aufweisenden Bereichs des Leitungsträgers vor dem Übergang in den Umlenkbereich und vor oder nach dem Übergang aus dem Umlenkbereich in das Obertrum feststellen und diese Information an die Steuereinheit weitergeben.

Wenn zweckmäßigerweise mehrere über die maximale Längserstreckung eines Trums oder über die Länge des Leitungsträgers in bestimmten Abständen angeordnete Elektromagnete verwendet werden, sind die Elektromagnete in den oben genannten Positionen relativ zur Führungsvorrichtung beim Verfahren des Leitungsträgers mit Hilfe der Sensoren und der Steuerungseinrichtung sukzessiv so ansteuerbar, dass das Magnetfeld in der oben beschriebenen Weise sukzessiv ein- und ausgeschaltet werden kann.

Die Verwendung von in der oben beschriebenen Weise ansteuerbaren Elektromagneten ist auch dann zweckmäßig, wenn sie zur Anhaftung des beweglichen Trums eines Leitungsträgers an einem Anlagebereich der Führungsvorrichtung dienen sollen, der zum Verfahren des Leitungsträgers an einen Antrieb gekoppelt ist und das betreffende Trum durch die magnetische Anziehungskraft zwischen den Elektromagneten und dem Anlagebereich mitnimmt.

Ausführungsbeispiele der vorliegenden Erfindung werden im Folgenden anhand der Zeichnung näher erläutert.

In der Zeichnung zeigen:
- Fig. 1: eine perspektivische Draufsicht auf ein Kettenglied einer Energieführungskette mit auf dem oberen Quersteg angeordnetem Magneten,
- Fig. 2: eine Ansicht der in Fig. 1 gezeigten Halterung für den Magneten von unten,
- Fig. 3: eine stirnseitige Ansicht der Halterung in Richtung des Pfeils III in Fig. 2,
- Fig. 4: eine Ansicht der Halterung für den Magneten von oben,
- Fig. 5: eine perspektivische Ansicht eines Kettenglieds von oben gemäß Fig. 1 mit auseinandergezogener Darstellung des Magneten und seiner Halterung,
- Fig. 6: eine perspektivische Darstellung des Kettenglieds gemäß Fig. 5 von unten,
- Fig. 7: eine Seitenansicht einer Leitungsführungseinrichtung bei vertikaler Anordnung des Leitungsträgers,
- Fig. 8: eine vergrößerte Darstellung des Bereichs A in Fig. 7,
- Fig. 9: ein weiteres Ausführungsbeispiel einer Leitungsführungseinrichtung bei vertikaler Anordnung des Leitungsträgers,
- Fig. 10: eine perspektivische Ansicht eines Kettenglieds einer Energieführungskette mit auseinandergezogener Darstellung eines stabförmigen Magneten und der diesen aufnehmenden seitlichen Öffnung,
- Fig. 11: eine Seitenansicht des in Fig. 10 dargestellten Kettenglieds mit in die Öffnung eingesetztem stabförmigem Magneten,
- Fig. 12: eine längs der Linie D-D in Fig. 11 geschnittene Ansicht in Richtung der Pfeile D,
- Fig. 13: eine perspektivische Ansicht eines Kettenglieds mit auseinandergezogener Darstellung des Magneten und einer diesen im Quersteg aufnehmenden Tasche,
- Fig. 14: eine stirnseitige Ansicht des in Fig. 13 gezeigten Kettenglieds in Richtung des Pfeils XIV,
- Fig. 15: eine Schnittdarstellung längs der Linie E-E in Fig. 14 in Richtung des Pfeils E,
- Fig. 16: eine weitere Ausführung der Leitungsführungseinrichtung mit kreisbogenförmiger Führung des Leitungsträgers,
- Fig. 17: eine vergrößerte Darstellung des Umlenkbereichs des in Fig. 16 gezeigten Leitungsträgers,
- Fig. 18: ein weiteres Ausführungsbeispiel einer Leitungsführungseinrichtung mit ansteuerbaren Magneten und
- Fig. 19: eine vergrößerte Darstellung eines einen Magneten aufweisenden Bereichs der in Fig. 18 gezeigten Leitungsführungseinrichtung.

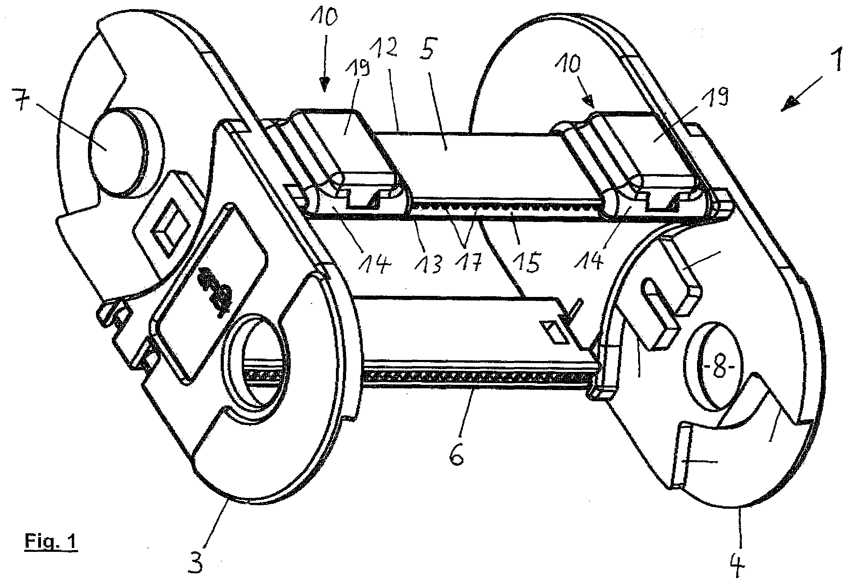

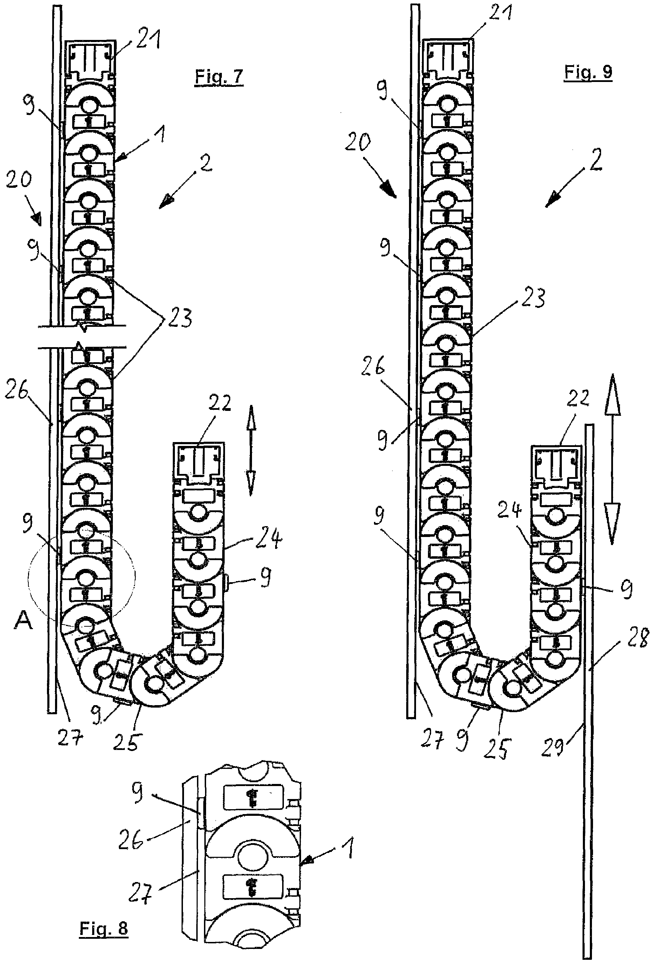

Figur 1 in Verbindung mit den Figuren 7 bis 9 und 16 bis 19 zeigt ein Kettenglied 1 eines als Energieführungskette ausgebildeten Leitungsträgers 2. Das Kettenglied 1 weist zwei Seitenlaschen 3 und 4 und diese miteinander verbindende Querstege 5 und 6 auf. Benachbarte Kettenglieder 1 der Energieführungskette sind gelenkig miteinander verbunden. Im betrachteten Ausführungsbeispiel dienen zur gelenkigen Verbindung Gelenkzapfen 7 und Gelenköffnungen 8.

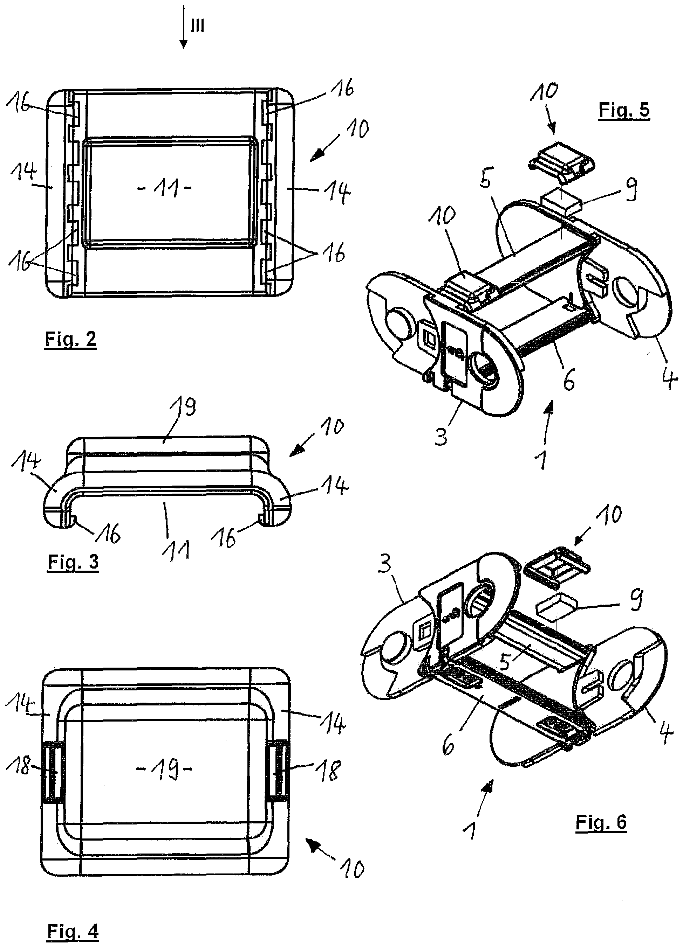

Wie aus Figur 1 in Verbindung mit den Figuren 5 und 6 hervorgeht, sind im Bereich des oberen Querstegs 5, der an die Seitenlaschen 3 und 4 anschließt, zwei Magnete 9 angeordnet. Es handelt sich dabei um Kunststoff gebundene Permanentmagnete. Die beiden Magnete 9 sind symmetrisch in Bezug auf die parallel zu den Seitenlaschen 3 und 4 verlaufende Längsmittelebene des Leitungsträgers 2 angeordnet.

Jeder Magnet 9 ist in einer Halterung 10 angeordnet, der auf den Quersteg 5 aufclipsbar ist. Wie aus den Figuren 2 bis 6 hervorgeht, weist die Halterung 10 eine zum Quersteg 5 offene und nach außen geschlossene Tasche 11 auf, in die der Magnet 9 einsetzbar ist. Der Magnet 9 wird zwischen der Halterung 10 und dem Quersteg 5 gehalten.

Wie weiterhin aus den Figuren 1 bis 6 hervorgeht, weist die Halterung 10 an den beiden Längsseiten 12 und 13 Klauen 14 auf, die in Öffnungen 15 in den Längsseiten 11 und 12 des Querstegs 5 eingreifen. Wie insbesondere die Figuren 2 und 3 zeigen, weisen die Klauen 14 an ihren Eingriffsenden kammartig angeordnete Vorsprünge 16 auf, die zwischen an der Oberseite der Öffnungen 15 der Längsseiten 12 und 13 des Querstegs 5 angeordnete Vorsprünge 17 greifen. Durch die zahnartig ineinander greifenden Vorsprünge 16 und 17 können die Halterungen 10 für die Magnete 9 unverschiebbar auf dem Quersteg 5 angeordnet werden.

Zum Lösen der auf den Quersteg 5 aufgeclipsten Halterungen 10 sind an der Oberseite der Klauen 14 Vertiefungen 18 vorgesehen, in die von oben ein Werkzeug eingesetzt werden kann. Durch Verschwenken des Werkzeugs gegen einen nach oben vorstehenden, die Tasche 11 aufweisenden Bereich 19 der Halterung 10 können die Klauen 14 von den Längsseiten 12 und 13 des Querstegs 5 gelöst werden.

Der Quersteg 5 ist bei dem in Figur 1 gezeigten Ausführungsbeispiel eines Kettenglieds 1 einstückig mit den Seitenlaschen 3 und 4 verbunden. Der untere Quersteg 6 ist separat zu den Seitenlaschen 3 und 4 ausgeführt und an seinen beiden Enden verschwenkbar und durch ein Rastmittel mit den Seitenlaschen 3 und 4 verbunden.

Die Figuren 7 und 8 zeigen ein Ausführungsbeispiel einer Leitungsführungseinrichtung, die einen aus den in Figur 1 gezeigten Kettengliedern 1 zusammengesetzten Leitungsträger 2, nämlich eine Energieführungskette, und eine Führungsvorrichtung 20 umfasst.

Der Leitungsträger 2 dient zur Aufnahme und Führung von (in der Zeichnung nicht dargestellten) Kabeln, Schläuchen und anderen energie- oder signalübertragenden Leitungen und weist an seinem einen Ende einen ersten, stationären Anschluss 21 und an seinem anderen Ende einen zweiten, beweglichen Anschluss 22 auf. Mit dem ersten Anschluss 21 ist ein erstes Trum 23 und mit dem zweiten Anschluss ein zweites Trum 24 verbunden. Die beiden Trume 23 und 24 sind über einen Umlenkbereich 25 des Leitungsträgers 2 miteinander verbunden. Der zweite, bewegliche Anschluss 22 kann an einen (in der Zeichnung nicht dargestellten) Mitnehmer angeschlossen sein, über den der Anschluss 22 mit einem beweglichen Maschinenteil verbunden ist, dem Energie über den Leitungsträger von einem mit dem ersten Anschluss verbundenes stationäres Maschinenteil zugeführt werden soll. Bei Bewegung des beweglichen Maschinenteils wird der Leitungsträger 2 in den durch den in Figur 7 eingetragenen Doppelpfeil angegebenen vertikalen Richtungen verfahren.

Wie aus Figur 7 hervorgeht, ist etwa jedes dritte Kettenglied 1 mit zwei Magneten 9 in Halterungen 10 auf dem äußeren Quersteg 5, wie in Figur 1 gezeigt, versehen. Unter dem äußeren Quersteg 5 ist der an der in Bezug auf den Umlenkbereich 25 nach außen weisenden Seite des Kettenglieds angeordnete Quersteg zu verstehen.

Der in Bezug auf den Umlenkbereich 25 des Leitungsträgers 2 nach außen weisenden Seite des ersten, mit dem stationären Anschluss 21 verbundenen Trums 23 gegenüberliegend ist ein Anlagebereich 26 angeordnet, der einen ferro- oder ferrimagnetischen Werkstoff aufweist. Der Anlagebereich 26 ist plattenförmig ausgebildet und weist eine ebene Anlagefläche 27 für das erste Trum 23 des Leitungsträgers 2 auf.

Der Anlagebereich 26 erstreckt sich etwa über die maximale Länge, die für das erste Trum 23 beim Verfahren des Leitungsträgers 2 erreicht werden kann und in etwa in Figur 7 dargestellt ist. In seiner Breite erstreckt sich der plattenförmige Anlagebereich 26 über die beiden an den äußeren Querstegen 5 der jeweiligen Kettenglieder 1 angeordneten Magnete 9, vorzugsweise über mindestens die Breite der Kettenglieder 1. Außer dem Anlagebereich 26 kann die Führungsvorrichtung 20 weitere Teile, wie zum Beispiel seitliche Führungsteile für die Seitenlaschen 3 und 4 des Leitungsträgers 2, einschließen.

Die an den äußeren Querstegen 5 angeordneten Magnete 9 wirken im Bereich des ersten Trums 23 des Leitungsträgers 2 mit dem Anlagebereich 26 derart zusammen, dass die magnetische Anziehungskraft zwischen beiden ein Anhaften des ersten Trums 23 an der Führungsvorrichtung 20 bewirkt, so dass ihr entgegen gerichtete auf den Leitungsträger wirkende Kräfte beim Verfahren des Leitungsträgers 2, die zu Schwingungen des Leitungsträgers 2 und einem Gegeneinanderschlagen der beiden Trume 23 und 24 führen könnten, vollständig kompensiert werden. Dabei ist durch die Wahl der Feldstärke der Magnete und Permabilität der magnetischen Eigenschaften, insbesondere und Remanenz, des magnetisierbaren Werkstoffs des Anlagebereichs 25 die Anziehungskraft so bestimmt, dass ein Lösen des mit den Magneten 9 versehenen Trums 23 vom Anlagebereich 26 durch die das Verfahren des Leitungsträgers 2 bewirkende Antriebskraft noch ermöglicht wird.

Der Anlagebereich 26 besteht insgesamt aus einem kunststoffgebundenen magnetisierbaren Werkstoff.

Figur 9 zeigt ein weiteres Ausführungsbeispiel einer Leitungsführungseinrichtung, bei der der Leitungsträger 2 wie im vorstehend beschriebenen Ausführungsbeispiel gemäß Figur 7 ausgebildet ist und ein magnetisierbarer Anlagebereich 26 für das mit dem stationären Anschluss 21 verbundene erste Trum 23 vorgesehen ist. Darüber hinaus ist ein weiterer Anlagebereich 28 für das mit dem beweglichen Anschluss 22 verbundene zweite Trum 24 vorgesehen, mit dem das zweite Trum 24 in den durch den Doppelpfeil in Figur 9 angegebenen vertikalen Richtungen mitgeführt wird. Der Anlagebereich 28 aus ferro- oder ferrimagnetischem Material erstreckt sich über die beim Verfahren des Leitungsträgers 2 maximal erreichbare Länge des Trums 24 und weist die gleiche Breite auf wie der Anlagebereich 26 für das erste Trum 23.

Die Eigenschaften des magnetisierbaren Werkstoffs des Anlagebereichs 28, insbesondere seine Permeabilität und Remanenz, sind so gewählt, dass über die Kompensation quer zur Verfahrensrichtung auftretender Kräfte und vertikaler Zug- oder Druckkräfte auch die beim Hin- und Herverfahren des Leitungsträgers 2 auftretenden Trägheitskräfte nicht zu einem Lösen des zweiten Trums 24 von der Anlagefläche 29 des Anlagebereichs 28 führen können. Dennoch soll die magnetische Anziehungskraft so beschaffen sein, dass die zum Verfahren des Leitungsträgers 2 in den Umlenkbereich 25 hinein wirkende Kraft im Stande ist, den in den Umlenkbereich 25 einzutretenden mit Magneten 9 versehenen Bereich des Trums 24 von der Anlagefläche 29 zu lösen.

Bei bestimmten Anwendungen mit nicht zu langen Verfahrwegen und nicht zu hohen Verfahrgeschwindigkeiten kann vorgesehen sein, den Leitungsträger 2 über den Anlagebereich 28, an dem das Trum 24 anhaftet, bzw. eine den Anlagebereich 28 aufweisende (in der Zeichnung nicht dargestellte) Führungsvorrichtung anzutreiben. Der Anlagebereich 28 bzw. die diesen aufweisenden Führungsvorrichtung wird in diesem Falle seinerseits bzw. ihrerseits durch einen (in der Zeichnung nicht dargestellten) Antrieb in vertikaler Richtung bewegt.

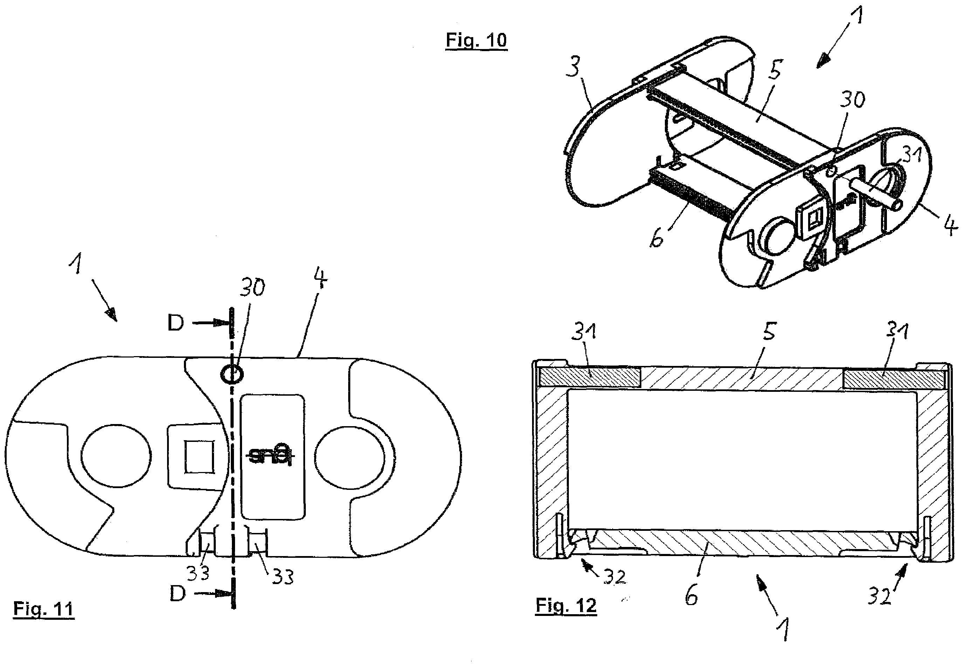

Die Figuren 10 bis 12 zeigen ein weiteres Ausführungsbeispiel für die Anordnung eines Magneten im Bereich des oberen Querstegs 5 eines Kettenglieds 1.

Das Kettenglied 1 ist in der Art des in Figur 1 gezeigten Kettengliedes ausgebildet. In den Seitenlaschen 3 und 4 sind zylinderförmige Durchgangsöffnungen 30 in der Nähe des oberen Querstegs 5 ausgebildet, in die jeweils ein stabförmiger Magnet 31, der sich in den Quersteg 5 hinein erstreckt, einführbar ist. Der Magnet ist wiederum als Permanentmagnet ausgeführt.

Aus der Querschnittzeichnung gemäß Figur 12 sind die Rastmittel 32, mit denen der untere Quersteg 6 mit den Seitenlaschen 3 und 4 verbunden ist, hervor. Ferner sind der Seitenansicht der Seitenlasche 4 in Figur 11 die am betreffenden Ende des Querstegs 6 angeordneten Gelenkzapfen 33 zur schwenkbaren Lagerung des Querstegs 6 an der Seitenlasche 4 zu erkennen.

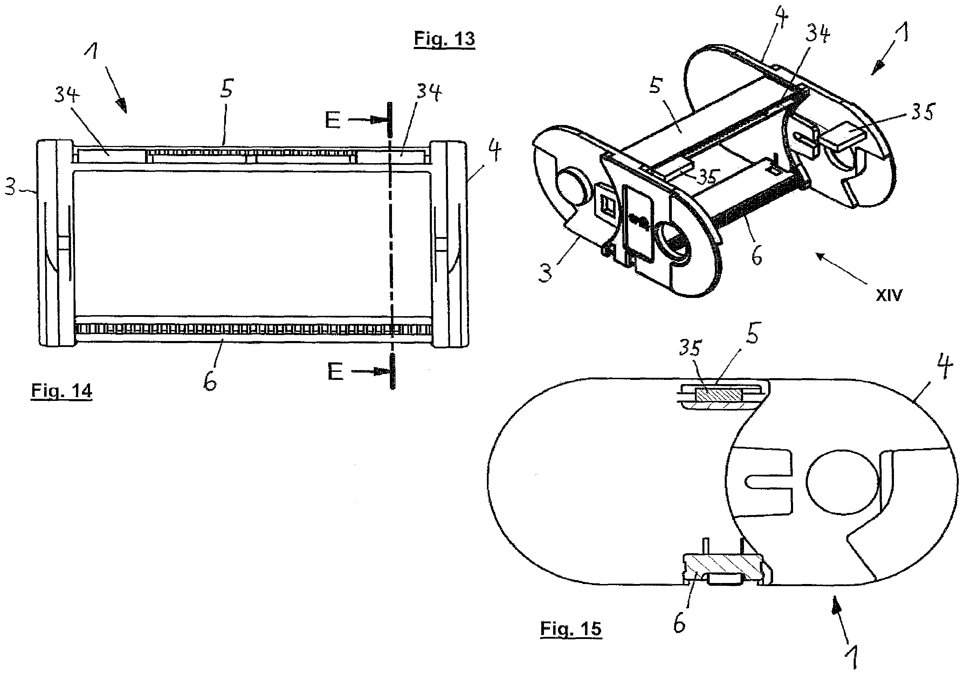

In den Figuren 13 bis 15 ist eine andere mögliche Anordnung eines Magneten im Bereich des oberen Querstegs 5 eines Kettenglieds 1 dargestellt.

Dazu ist in einer in Längsrichtung des Kettenglieds 1 offenen Tasche 34 des Querstegs 5 ein plattenförmiger Magnet 35 eingesetzt, der wiederum als Permanentmagnet ausgebildet ist.

Im Übrigen ist das in den Figuren 13 bis 15 gezeigte Kettenglied 1 nach Art des in Figur 1 gezeigten Kettenglieds 1 gestaltet.

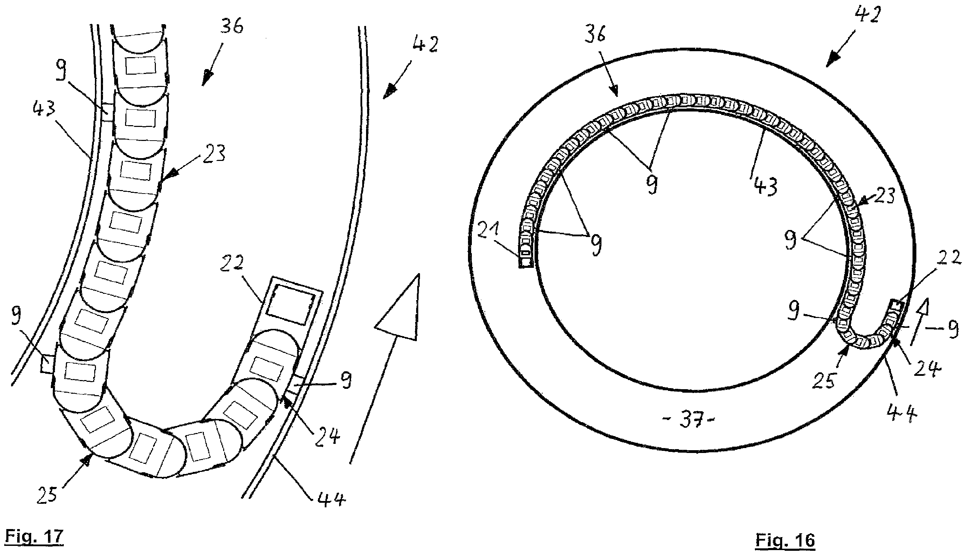

In den Figuren 16 und 17 ist eine weitere Anwendung eines Leitungsträgers und einer Führungsvorrichtung gezeigt. Wie aus diesen Figuren hervorgeht, erstrecken sich die beiden Trume 23 und 24 des Leitungsträgers 36 kreisbogenförmig. Der Leitungsträger 36 ist als sogenannte Kreiskette ausgebildet und ist innerhalb des in Figur 16 gezeigten Kreisringes 37 über einen Winkel von 360° verfahrbar.

Die Kreiskette ist wie die in den Ausführungsbeispielen gemäß den Figuren 7 und 9 verwendete Energieführungskette mit Kettengliedern 1 ausgebildet. Da die Kreiskette im Umlenkbereich 25 und im Bereich der Trume 23 und 24 unterschiedliche Krümmungen aufweist, sind die an den Kettengliedern 1 vorgesehenen Anschläge 28 - 41 (siehe Figur 1) zur Begrenzung des Schwenkwinkels hier derart angeordnet, dass sie eine begrenzte Verschwenkung der Kettenglieder in beiden Verschwenkrichtungen erlauben. Ansonsten ist der in den Figuren 16 und 17 gezeigte Leitungsträger 36 wie in den durch die Figuren 1 - 9 dargestellten Ausführungsbeispielen ausgebildet.

Die Führungsvorrichtung 42 für die in den Figuren 16 und 17 dargestellte Kreiskette weist einen inneren Anlagebereich 43 für das innere Trum 23 und einen dazu konzentrischen äußeren Anlagebereich 44 für das äußere Trum 24 auf. Das innere Trum 23 ist mit dem stationären Abschluss 21 verbunden, der stationär zu dem inneren Anlagebereich 43 angeordnet ist, während das äußere Trum 24 mit dem beweglichen Anschluss 22 verbunden ist, der stationär zu dem relativ zum inneren Anlagebereich 43 drehbar beweglichen äußeren Anlagebereich 44 angeordnet ist.

In der in den Figuren 16 und 17 gezeigten Position der Kreiskette erstreckt sich das innere Trum 23 über seine maximale Länge. Die aus dieser Position erfolgende Verfahrrichtung der Kreiskette ist durch den in den Figuren 16 und 17 eingezeichneten Pfeil dargestellt.

Die Kreiskette ist wie der in den Figuren 7 und 9 dargestellte Leitungsträger 2 mit Magneten 9 im Bereich der äußeren Querstege 5 etwa jeden Dritten Kettenglieds 1 ausgerüstet. Wie in den schon beschriebenen Ausführungsbeispielen haften die Magnete 9 im Bereich der beiden Trume 23 und 24 an den einen magnetisierbaren Werkstoff aufweisenden Anlagebereichen 43 und 44. An die Feldstärke und die magnetischen Eigenschaften des ferro-oder ferrimagnetischen Werkstoffs der Anlagebereiche 42 und 43 sind etwa die gleichen Anforderungen zu stellen wie in Bezug auf das Ausführungsbeispiel nach Figur 9 vorstehend beschrieben. Auch kann, wie im Zusammenhang mit dem Ausführungsbeispiel nach Figur 9 beschrieben, die Kreiskette durch die Drehung des äußeren Anlagebereichs 43 oder einer diesen Anlagebereich aufweisenden Führungsvorrichtung angetrieben werden.

Die in den Figuren 16 und 17 gezeigte Kreiskette und Führungsvorrichtung 42 kann insbesondere horizontal angeordnet sein, wobei die Kreiskette mit ihren Seitenlaschen 4 durch eine horizontale Basisfläche im Bereich des Kreisringes 37 abgestützt wird. In diesem Falle ist durch die magnetische Anziehungskraft zwischen den Magneten 9 und den Anlagenbereichen 43 und 44 nicht die Schwerkraft des Leitungsträgers 36 zu kompensieren. Eine zusätzliche Rolle spielt nur die Gleitreibung zwischen dem Leitungsträger 36 und der horizontalen Basisebene, durch die der Leitungsträger 36 abgestützt wird.

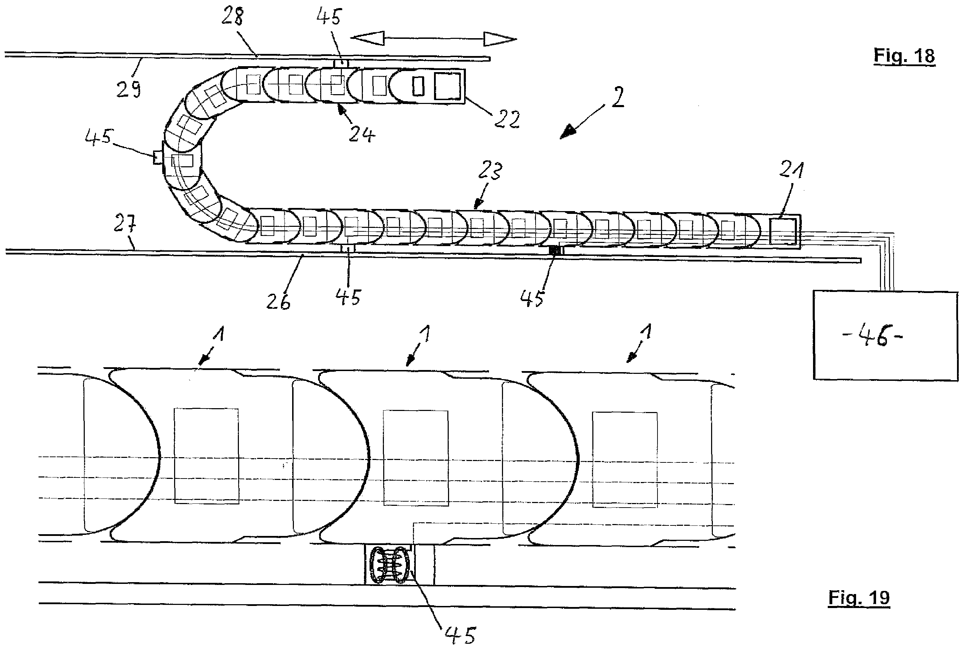

Bei dem in den Figuren 18 und 19 ausgeführten Ausführungsbeispiel sind die Magnete als Elektromagnete (45) ausgebildet. Mit Hilfe einer signaltechnisch mit den Elektromagneten 45 verbundenen Steuereinrichtung 46 kann das die Anziehungskraft zwischen den Elektromagneten 45 und den magnetisierbaren Anlagenbereichen 26 und 28 der Führungsvorrichtung 20 bewirkende Magnetfeld ein- und ausgeschaltet werden. Das Ausschalten des Magnetfeldes ist dann vorgesehen, wenn der den betreffenden Magneten aufweisende Bereich des Trums 23 oder 24 in den Umlenkbereich 25 übergehen soll. Der Übergang kann somit ohne zusätzlichen Kraftaufwand beim Verfahren des Leitungsträgers 2 erfolgen. Umgekehrt wird ein Einschalten des Magnetfeldes dann vorgesehen, wenn ein die Elektromagnete 45 aufweisendes Kettenglied 1 beim Verfahren des Leitungsträgers 2 aus dem Umlenkbereich 25 in ein Trum 23 bzw. 24 überführt wird.

Die Steuereinrichtung 46 ist weiterhin mit (in der Zeichnung nicht dargestellten) Sensoren signaltechnisch verbunden, die eine Information über die Position des Leitungsträgers 2 bei dessen Verfahren in der durch den Doppelpfeil in Figur 18 angegebenen einen oder anderen Richtung an die Steuereinrichtung 46 weiterleiten. In Abhängigkeit von dieser Position werden die Elektromagnete 45 sukzessiv angesteuert, so dass das durch den jeweiligen Elektromagneten 45 erzeugten Magnetfeld entsprechend ein-und ausgeschaltet wird.

Insbesondere dann, wenn die beiden Trume 23 und 24, wie in Figur 18 gezeigt, übereinander angeordnet sind, der Leitungsträger 2 einen relativ langen Verfahrweg, ein relativ großes Gewicht aufweist und/oder mit einer relativ hohen Geschwindigkeit verfahren wird, ist ein Abschalten des Magnetfeldes beim Übergang in den Umlenkbereich 25 und ein Einschalten des Magnetfeldes beim rückwärtigen Verfahren des oberen Trums 24 beim Übergang aus dem Umlenkbereich 25 in das längs des Anlagebereichs 28 gestreckte obere Trum 24 von Vorteil.

Ebenso ist die Verwendung von Elektromagneten von Vorteil, wenn das Obertrum des in Figur 18 gezeigten Leitungsträgers 2 durch den Anlagebereich 28 oder eine diesen aufweisende Führungsvorrichtung angetrieben wird, um die dabei vom Anlagebereich 28 auf den Leitungsträger 2 ausgeübten Trägheitskräfte durch die magnetischen Anziehungskräfte zu kompensieren.

### Bezugszeichenliste

- 1: Kettenglied
- 2: Leitungsträger
- 3: Seitenlasche
- 4: Seitenlasche
- 5: Quersteg
- 6: Quersteg
- 7: Gelenkzapfen
- 8: Gelenköffnung
- 9: Magnet
- 10: Halterung
- 11: Tasche
- 12: Längsseite
- 13: Längsseite
- 14: Klaue
- 15: Öffnung
- 16: Vorsprung
- 17: Vorsprung
- 18: Vertiefung
- 19: Bereich
- 20: Führungsvorrichtung
- 21: Anschluss
- 22: Anschluss
- 23: Trum
- 24: Trum
- 25: Umlenkbereich
- 26: Anlagebereich
- 27: Anlagefläche
- 28: Anlagebereich
- 29: Anlagefläche
- 30: Durchgangsöffnung
- 31: Magnet
- 32: Rastmittel
- 33: Gelenkzapfen
- 34: Tasche
- 35: Magnet
- 36: Leitungsträger
- 37: Kreisring
- 38: Anschlag
- 39: Anschlag
- 40: Anschlag
- 41: Anschlag
- 42: Führungsvorrichtung
- 43: Anlagebereich
- 44: Anlagebereich
- 45: Elektromagnet
- 46: Steuereinrichtung

## Patentansprüche

1. Leitungsführungseinrichtung mit einem als Energieführungskette ausgebildeten Leitungsträger (2, 36) zur Aufnahme und Führung von Leitungen zwischen einem ersten Anschluss (21) und einem zweiten Anschluss (22), die relativ zueinander beweglich sind, und einer Führungsvorrichtung (20, 42) für den Leitungsträger (2, 36), wobei der Leitungsträger (2, 36) ein mit dem ersten Anschluss (21) verbundenes erstes Trum (23) und ein mit dem zweiten Anschluss (22) verbundenes zweites Trum (24) aufweist, die durch einen Umlenkbereich (25) miteinander verbunden sind und die Energieführungskette Glieder aufweist, die jeweils zwei Seitenlaschen (3, 4) und einen diese miteinander verbindenden, in Bezug auf den Umlenkbereich (25) äußeren Quersteg (5) und inneren Quersteg (6) aufweisen, und die Führungseinrichtung (20, 42) mindestens einen Anlagebereich (26, 28) zur stationären Anlage mindestens eines Teils eines der Trume (23, 24) aufweist, wobei der Leitungsträger (2, 36) mindestens einen Magneten (9, 31, 35) aufweist, der im Bereich eines äußeren Querstegs (5) angeordnet ist, und der Anlagebereich (26, 28) zur stationären Anlage mindestens eines Teils eines der Trume (23, 24) einen ferro- oder ferrimagnetischen Werkstoff aufweist, und an einer Seite der Führungsvorrichtung (20, 42) angeordnet ist, die der in Bezug auf den Umlenkbereich (25) nach außen weisenden Seite des Leitungsträgers (2, 36) gegenüber liegt, wobei der mindestens eine Magnet (9, 31, 35) in einem vorbestimmten Positionsbereich des Leitungsträgers (2, 36) in Bezug auf die Führungsvorrichtung (20, 42) mit dem Anlagebereich (26, 28) derart zusammenwirkt, dass das den Magneten (9, 31, 35) aufweisende Trum (23, 24) mit einer vorbestimmten magnetischen Anziehungskraft an dem Anlagebereich (26, 28) anhaftet, **dadurch gekennzeichnet, dass** der mindestens eine Magnet (9) in einer Halterung (10) angeordnet ist, die auf den betreffenden äußeren Quersteg (5) aufclipsbar ist, und eine zum äußeren Quersteg (5) offene und nach außen geschlossene Tasche (11) aufweist, in die der Magnet (9) einsetzbar ist, oder der Magnet (35) in einer in Längsrichtung der Energieführungskette offenen Tasche (34) eines äußeren Querstegs (5) angeordnet ist, oder der Magnet (31) in einer sich von der Außenseite einer Seitenlasche (3, 4) durch diese hindurch in einen äußeren Quersteg (5) hinein erstreckenden Tasche angeordnet ist, in die er von außen einführbar ist.

2. Leitungsführungseinrichtung nach Anspruch 1, **dadurch gekennzeichnet, dass** der mindestens eine Magnet (9, 31, 35) ein kunststoffgebundener Permanentmagnet ist.

3. Leitungsführungseinrichtung nach Anspruch 1 oder 2, **dadurch gekennzeichnet, dass** der Leitungsträger (2, 36) in äquidistanten Bereichen in seiner Längsrichtung jeweils mindestens einen Magneten (9, 31, 35) aufweist.

4. Leitungsführungseinrichtung nach einem der Ansprüche 1 bis 3, **dadurch gekennzeichnet, dass** die Führungsvorrichtung (20) ausschließlich für eines der Trume (23, 24) einen Anlagebereich (26) mit ferro- oder ferrimagnetischem Werkstoff aufweist.

5. Leitungsführungseinrichtung nach einem der Ansprüche 1 bis 4, **dadurch gekennzeichnet, dass** die Führungsvorrichtung (20, 42) für jedes der beiden Trume (23, 24) einen Anlagebereich (26, 28) mit ferro- oder ferrimagnetischem Werkstoff aufweist.

6. Leitungsführungseinrichtung nach einem der Ansprüche 1 bis 5, **dadurch gekennzeichnet, dass** der Anlagebereich (26, 28) eine ebene, dem Leitungsträger (2, 36) gegenüberliegende Anlagefläche (27, 29) aufweist.

7. Leitungsführungseinrichtung nach einem der Ansprüche 1 bis 6, **dadurch gekennzeichnet , dass** an mindestens einem Kettenglied (1) mindestens zwei Magnete (9, 31, 35) vorgesehen sind, die symmetrisch in Bezug auf die parallel zu den Seitenlaschen (3, 4) verlaufende Längsmittelebene der Energieführungskette angeordnet sind.

8. Leitungsführungseinrichtung nach einem der Ansprüche 1 bis 7, **dadurch gekennzeichnet, dass** der den ferro- oder ferrimagnetischen Werkstoff aufweisende Anlagebereich (26, 28) der Führungsvorrichtung (20, 42) in Form einer ebenen Platte ausgebildet ist, die sich über die beim Verfahren des Leitungsträgers (2, 36) maximal ausgezogene Länge des den mindestens einen Magneten (9, 31, 35) aufweisenden Trums (23, 24) erstreckt.

9. Leitungsführungseinrichtung nach einem der Ansprüche 1 bis 8, **dadurch gekennzeichnet, dass** der den ferro- oder ferrimagnetischen Werkstoff aufweisende Anlagebereich an seiner auf den Leitungsträger (2, 36) hinweisenden und mit diesem in Kontakt tretenden Anlagefläche (27, 29) eine den ferro- oder ferrimagnetischen Werkstoff überziehende Schicht aus nicht magnetisierbarem Werkstoff aufweist.

10. Leitungsführungseinrichtung nach einem der Ansprüche 1-9, **dadurch gekennzeichnet, dass** der mindestens eine Magnet als Elektromagnet (45) ausgebildet ist.

11. Leitungsführungseinrichtung nach Anspruch 10, **dadurch gekennzeichnet, dass** der Elektromagnet (45) signaltechnisch mit einer Steuereinrichtung (46) verbunden ist, mit der das durch ihn erzeugte Magnetfeld ein- und ausschaltbar ist.

12. Leitungsführungseinrichtung nach Anspruch 11, **dadurch gekennzeichnet, dass** die Steuereinrichtung (46) signaltechnisch mit einem oder mehreren Sensoren verbunden ist, mit denen die Position des den Elektromagneten aufweisenden Bereichs des Leitungsträgers (2, 36) vor dem Übergang in den Umlenkbereich (25) und vor oder nach dem Übergang aus dem Umlenkbereich in das betreffende Trum (23, 24) feststellbar und diese Informationen an die Steuereinrichtung (46) weiterleitbar ist.

13. Leitungsführungseinrichtung nach Anspruch 11 oder 12, **dadurch gekennzeichnet, dass** mehrere über die maximale Längserstreckung eines Trums (23, 24) oder über die gesamte Länge des Leitungsträgers (2, 36) in vorbestimmten Abständen angeordnete Elektromagnete vorgesehen sind und mit der Steuerungseinrichtung (46) signaltechnisch so verbunden sind, dass sie in Abhängigkeit von der Position des Leitungsträgers (2, 36) sukzessiv ansteuerbar sind.

14. Leitungsführungseinrichtung nach einem der Ansprüche 1 bis 13, **dadurch gekennzeichnet, dass** ein Anlagebereich (28) der Führungsvorrichtung (20, 42) zum Verfahren des Leitungsträgers (2, 36) an einen Antrieb gekoppelt ist und das betreffende mit mindestens einem Teil am Anlagebereich (28) anliegende Trum (24) durch die magnetische Anziehungskraft zwischen dem mindestens einen Magneten (9, 31, 35) und dem Anlagebereich (28) mitnimmt.

## Claims

1. A line guide device comprising a line carrier (2, 36) designed as an energy guiding chain for receiving and guiding lines between a first connection (21) and a second connection (22) which are moveable relative to each other, and a guiding device (20, 42) for the line carrier (2, 36), wherein the line carrier (2, 36) has a first run (23) connected to the first connection (21) and a second run (24) connected to the second connection (22), which runs are connected together by a direction-changing region (25), and the energy guiding chain has chain links, which respectively have two side plates (3, 4) and an outer transverse leg (5) and an inner transverse leg (6) in relation to the direction-changing region (25) connecting the two side plates together, and the guiding device (20, 42) has at least one contact region (26, 28) for stationary contact of at least a part of one of the runs (23, 24), wherein the line carrier (2, 36) has at least one magnet (9, 31, 35), arranged in the area of an outer transverse leg (5), and the contact region (26, 28) for stationary contact of at least a part of one of the runs (23, 24) has a ferromagnetic or ferrimagnetic material and is arranged at a side of the guiding device (20, 42), which is disposed opposite the side of the line carrier (2, 36) facing outwardly in relation to the direction-changing region (25), wherein in a predetermined positional region of the line carrier (2, 36) in relation to the guiding device (20, 42) the at least one magnet (9, 31, 35) cooperates with the contact region (26, 28) in such a way that the run (23, 24) having the magnet (9, 31, 35) adheres to the contact region (26, 28) with a predetermined magnetic attraction force, **characterised in that** the at least one magnet (9) is arranged in a holder (10) which can be clipped onto the respective outer transverse leg (5), and has a pocket (11) which is open to the transverse leg (5) and which is closed outwardly and into which the magnet (9) can be inserted, or the magnet (34) is arranged in a pocket (35) of an outer transverse leg (5), which pocket is open in the longitudinal direction of the energy guiding chain, or the magnet (31) is arranged in a pocket which extends from the outside of a side plate (3, 4) through same into an outer transverse leg (5) and into which it can be introduced from the outside.

2. A line guide device as set forth in claim 1 **characterised in that** the at least one magnet (9, 31, 35) is a plastic-bonded permanent magnet.

3. A line guide device as set forth in claim 1 or 2 **characterised in that** at equidistant regions in its longitudinal direction the line carrier (2, 36) has at least one respective magnet (9, 31, 35).

4. A line guide device as set forth in one of claims 1 through 3 **characterised in that** the guiding device (20) has a contact region (26) with ferromagnetic or ferrimagnetic material exclusively for one of the runs (23, 24).

5. A line guide device as set forth in one of claims 1 through 4 **characterised in that** for each of the two runs (23, 24) the guiding device (20, 42) has a contact region (26, 28) with ferromagnetic or ferrimagnetic material.

6. A line guide device as set forth in one of claims 1 through 5 **characterised in that** the contact region (26, 28) has a flat contact surface (27, 29) opposite to the line carrier (2, 36).

7. A line guide device as set forth in one of claims 1 through 6 **characterised in that** provided at at least one chain link (1) are at least two magnets (9, 31, 35) arranged symmetrically in relation to the longitudinal central plane of the energy guiding chain, that extends parallel to the side plates (3, 4).

8. A line guide device as set forth in one of claims 1 through 7 **characterised in that** the contact region (26, 28) of the guiding device (20, 42), that has the ferromagnetic or ferrimagnetic material, is in the form of a flat plate which extends over the length at maximum extension upon displacement of the line carrier (2, 36) of the run (23, 24) having the at least one magnet (9, 31, 35).

9. A line guide device as set forth in one of claims 1 through 8 **characterised in that**, at its contact surface (27, 29) which faces towards the line carrier (2, 36) and comes into contact therewith, the contact region having the ferromagnetic or ferrimagnetic material has a layer of non-magnetizable material, which covers over the ferromagnetic or ferrimagnetic material.

10. A line guide device as set forth in one of claims 1 through 9 **characterised in that** the at least one magnet is in the form of an electromagnet (45).

11. A line guide device as set forth in claim 10 **characterised in that** the electromagnet (45) is connected in signal relationship to a control device (46) with which the magnetic field generated by the electromagnet can be switched on and off.

12. A line guide device as set forth in claim 11 **characterised in that** the control device (46) is connected in signal relationship to one or more sensors with which the position of the region of the line carrier (2, 36) that has the electromagnet can be established prior to the transition into the direction-changing region (25) and prior to or after the transition out of the direction-changing region into the run (23, 24) in question and said items of information can be passed to the control device (46).

13. A line guide device as set forth in claim 11 or claim 12 **characterised in that** there are provided a plurality of electromagnets which are arranged at predetermined spacings over the maximum longitudinal extent of a run (23, 24) or over the total length of the line carrier (2, 36) and are connected in signal relationship to the control device (46) in such a way that they are successively actuable in dependence on the position of the line carrier (2, 36).

14. A line guide device as set forth in one of claims 1 through 13 **characterised in that** a contact region (28) of the guiding device (20, 42) is coupled to a drive for displacement of the line carrier (2, 36) and entrains the run (24) in question by the magnetic attraction force between the at least one magnet (9, 31, 35) and the contact region (28).

## Revendications

1. Dispositif de guidage de conduite avec un porte-conduite (2, 36) réalisé comme chaîne de guidage de l'énergie pour recevoir et guider des conduites entre une première connexion (21) et une deuxième connexion (22), qui sont mobiles l'une par rapport à l'autre, et un dispositif de guidage (20, 42) pour le porte-conduite (2, 36), le porte-conduite (2, 36) comportant un premier brin (23) relié à la première connexion (21) et un deuxième brin (24) relié à la deuxième connexion (22), lesquels brins sont reliés entre eux par une zone de déviation (25), et la chaîne de guide de l'énergie comportant des maillons, dont chacun présente deux plaques latérales (3, 4) et une traverse extérieure (5) et une traverse intérieure (6) par rapport à la zone de déviation reliant les deux plaques latérales entre elles, et le dispositif de guidage (20, 42) présentant au moins une zone de contact (26, 28) pour le contact fixe d'au moins une partie de l'un des brins (23, 24), le porte-conduite (2, 36) présentant au moins un aimant (9, 31, 35) disposé dans la zone d'une traverse extérieure (5), et la zone de contact (6, 28) pour le contact fixe d'au moins une partie de l'un des brins (23, 24) étant en matériau ferromagnétique ou ferrimagnétique et étant disposé sur un côté du dispositif de guidage (20, 42) opposé au côté du porte-conduite (2, 36) tourné vers l'extérieur, ledit au moins un aimant (9, 31, 35) interagissant dans une plage de positions prédéterminée du porte-conduite (2, 36) par rapport au dispositif de guidage (20, 42) avec la zone de contact (26, 28) de telle sorte que le brin (23, 24) présentant l'aimant (9, 31, 35) adhère à la zone de contact (26, 28) avec une force d'attraction magnétique prédéterminée au niveau de la zone de contact (26, 28), **caractérisé en ce que** ledit au moins un aimant (9) est disposé dans un support (10) qui peut être clipsé sur la traverse extérieure (5) concernée et qui présente une poche (11) ouverte vers la traverse extérieure (5) et fermée vers l'extérieur, dans laquelle l'aimant (9) peut être inséré, ou l'aimant (35) est disposé dans une poche (34) d'une traverse extérieure (5) qui est ouverte dans la direction longitudinale de la chaîne de guidage d'énergie, ou l'aimant (31) est disposé dans une poche qui s'étend de l'extérieur d'une plaque latérale (3, 4) à travers celle-ci dans une traverse extérieure (5), ledit aimant pouvant être inséré dans cette poche de l'extérieur.

2. Dispositif de guidage de conduite selon la revendication 1, **caractérisé en ce qu'**au moins un des aimants (9, 31, 35) est un aimant permanent à liant plastique.

3. Dispositif de guidage de conduite selon la revendication 1 ou 2, **caractérisé en ce que** le porte-conduite (2, 36) présente, dans des zones équidistantes dans sa direction longitudinale, respectivement au moins un aimant (9, 31, 35).

4. Dispositif de guidage de conduite selon l'une des revendications 1 à 3, **caractérisé en ce que** le dispositif de guidage (20) présente une surface de contact (26) avec un matériau ferromagnétique ou ferrimagnétique exclusivement pour un des brins (23, 24).

5. Dispositif de guidage de conduite selon l'une des revendications 1 à 4, **caractérisé en ce que** le dispositif de guidage (20, 42) présente une zone de contact (26, 28) avec un matériau ferromagnétique ou ferrimagnétique pour chacun des deux brins (23, 24).

6. Dispositif de guidage de conduite selon l'une des revendications 1 à 5, **caractérisé en ce que** la zone de contact (26, 28) présente une surface de contact plane (27, 29) opposée au porte-conduite (2, 36).

7. Dispositif de guidage de conduite selon l'une des revendications 1 à 6, **caractérisé en ce qu'**au moins deux aimants (9, 31, 35) sont prévus sur au moins un maillon de chaîne (1), lesquels aimants (9, 31, 35) sont disposés symétriquement par rapport au plan médian longitudinal de la chaîne de guidage d'énergie s'étendant parallèlement aux plaques latérales (3, 4).

8. Dispositif de guidage de conduite selon l'une des revendications 1 à 7, **caractérisé en ce que** la surface de contact (26, 28) contenant le matériau ferromagnétique ou ferrimagnétique (20, 42) du dispositif de guidage (20, 42) est conçue sous la forme d'une plaque plane qui s'étend sur la longueur étendue maximale du brin (23, 24) comportant ledit au moins un aimant (9, 31, 35) lorsque le support de guidage (2, 36) est déplacé.

9. Dispositif de guidage de conduite selon l'une des revendications 1 à 8, **caractérisé en ce que** la zone de contact contenant le matériau ferromagnétique ou ferrimagnétique comporte une couche de matériau non magnétisable recouvrant le matériau ferromagnétique ou ferrimagnétique sur sa surface de contact (27, 29) tournée vers et venant en contact avec le porte-conduite (2, 36).

10. Dispositif de guidage de conduite selon l'une des revendications 1 à 9, **caractérisé en ce que** l'au moins un aimant est conçu comme un électroaimant (45).

11. Dispositif de guidage de conduite selon la revendication 10, **caractérisé en ce que** l'électroaimant (45) est connecté, en termes de technologie des signaux, à un dispositif de commande (46) au moyen duquel le champ magnétique généré par ledit électroaimant peut être activé et désactivé.

12. Dispositif de guidage de conduite selon la revendication 11, **caractérisé en ce que** le dispositif de commande (46) est connecté, en termes de technologie des signaux, à un ou plusieurs capteurs avec lesquels la position de la zone du porte-conduite (2, 36) contenant l'électro-aimant peut être détectée avant la transition vers la zone de déviation (25) et avant ou après la transition de la zone de déviation vers le brin concerné (23, 24) et cette information peut être transmise au dispositif de commande (46).

13. Dispositif de guidage de conduite selon la revendication 11 ou 12, **caractérisé en ce qu'**il sont prévus plusieurs électroaimants disposés en distances prédéterminées sur l'extension longitudinale maximale d'un brin (23, 24) ou sur toute la longueur du porte-conduite (2, 36) et sont connectés, en termes de technologie des signaux, au dispositif de commande (46) de telle sorte qu'ils peuvent être commandés successivement en fonction de la position du porte-conduite (2, 36).

14. Dispositif de guidage de conduite selon l'une des revendications 1 à 13, **caractérisé en ce qu'**une zone de contact (28) du dispositif de guidage (20, 42) est couplée à un dispositif d'entraînement pour déplacer le porte-conduite (2, 36) et entraîne le brin respectif (24), qui est en contact avec la zone de contact (28) avec au moins une partie, par la force d'attraction magnétique entre l'au moins un aimant (9, 31, 35) et la zone de contact (28).
